(19) Europäisches Patentamt
European Patent Office
Office européen des brevets

(11) **EP 0 489 034 B1**

(12) **EUROPEAN PATENT SPECIFICATION**

(45) Date of publication and mention
of the grant of the patent:
**28.01.1998 Bulletin 1998/05**

(21) Application number: **90911548.7**

(22) Date of filing: **13.07.1990**

(51) Int Cl.6: **G08B 5/22**

(86) International application number:
**PCT/US90/03876**

(87) International publication number:
**WO 91/03037 (07.03.1991 Gazette 1991/06)**

(54) **SELECTIVE CALL SIGNALLING SYSTEM**

SELEKTIVES SYSTEM FÜR AUFRUFSIGNALE

SYSTEME SELECTIF DE SIGNALISATION D'APPEL

(84) Designated Contracting States:
**AT BE CH DE DK ES FR GB IT LI LU NL SE**

(30) Priority: **21.08.1989 US 396189**

(43) Date of publication of application:
**10.06.1992 Bulletin 1992/24**

(73) Proprietor: **MOTOROLA, INC.**
**Schaumburg, IL 60196 (US)**

(72) Inventors:
 • **DELUCA, Michael, Joseph**
 **Boca Raton, FL 33486 (US)**
 • **SNOWDEN, Gregory, Olon**
 **Boca Raton, FL 33487 (US)**
 • **SCHWENDEMAN, Robert, John**
 **Pompano Beach, FL 33060 (US)**
 • **JASINSKI, Leon**
 **Ft. Lauderdale, FL 33301 (US)**

(74) Representative: **Dunlop, Hugh Christopher et al**
**Motorola,**
**European Intellectual Property Operations**
**Midpoint**
**Alencon Link**
**Basingstoke, Hampshire RG21 7PL (GB)**

(56) References cited:
**US-A- 4 427 980**    **US-A- 4 519 068**
**US-A- 4 668 949**    **US-A- 4 688 035**

**Description**

Background of the Invention

This invention generally relates to the area of signalling protocol systems. In particular, this invention relates to the area of a signalling protocol used with a paging system having a transmitter and a plurality of portable selective call receivers such as paging receivers.

A signalling protocol developed by Great Britain's Post Office Code Advisory Group (POCSAG) is widely used in paging systems. Also, the Golay Sequential Code (GSC) has enjoyed a number of years of satisfactory use in in paging systems the world over. However, the expanding market for paging receivers now requires a signalling system which communicates message information with less overhead than prior art systems.

The POCSAG protocol has overhead which diminishes its ability to communicate information. POCSAG reserves one information bit in every one of the 32,21 BCH message information words to establish the type of information included therein. The bit being in a first logic state indicates address information, and the second state indicates message information is contained within the word. Thus, of 21 information bits in the 32,21 word, one bit, or about 5% of the information, is used simply to indicate the type of information contained within the remaining 20 bits. Being as this bit does not contribute to the actual message information, it is overhead. A second type of overhead is a synchronization word inserted between every sixteen message information words. The synchronization word was used in order to maintain synchronization during the transmission of the protocol. However, advances in the state of the art in synchronization of paging receivers has eliminated the requirement for the sync code. Thus, the sync code occurring one of seventeen words, about 6% of the words, is no longer necessary and is also considered overhead. A third type of overhead occurs with the transmission of data messages. Of the data messages, telephone numbers are most often communicated. A formatted ten-digit telephone number uses one address word, three data words and an idle codeword. The idle codeword communicates no message information but acts as a separation signal between data messages. Thus, of the five words, one address, three data and one idle, the idle codeword provides no message information and is thus considered overhead. Thus, the overhead of the idle codeword can typically be 20%. In view of the first, second and third overhead signals, much efficiency can be gained with an improved signalling protocol.

The POCSAG protocol additionally suffers from the lack of ability to indicate in advance the occurrence of addresses. Since an address can occur almost anywhere within a transmission, paging receivers are required to search for address information when message information is transmitted. Furthermore, the POCSAG protocol suffers from a finite probably, that bit errors occurring in the message may cause the message information to be falsely interpreted. This is commonly considered a "false". It is desirable to provide for the reduction of falsely interpreting message information.

The GSC protocol has similar overhead signals and suffers from similar protocol problems.

Summary of the Invention

Thus, it is an object of the invention to resolve the aforementioned problems.

It is an object of the present invention, as defined by claims 1 and 3 to 6, to provide a method for receiving a message signal which resolves the aforementioned problems.

It is a further object of the present invention, as defined by claim 2, to provide a message signal.

Brief Description of the Drawings

FIG. 1 shows the overall structure of the protocol in accordance with the present invention

FIG. 2 shows the structure of the codeword used in accordance with the present invention.

FIG. 3 shows the structure of the data packets within the first information field.

FIG. 4 shows the structure of the check field.

FIG. 5 shows the interleaving the message information.

FIG. 6 shows a block diagram of a transmitter for generating a paging signal in accordance with the present invention.

FIG. 7 shows a block diagram of a paging receiver operating in accordance with the present invention.

FIG. 8 shows a flowchart of a transmitter operating in accordance with the present invention.

FIGS. 9A and 9B show a flowchart of a paging receiver operation in accordance with the present invention.

Description of a Preferred Embodiment

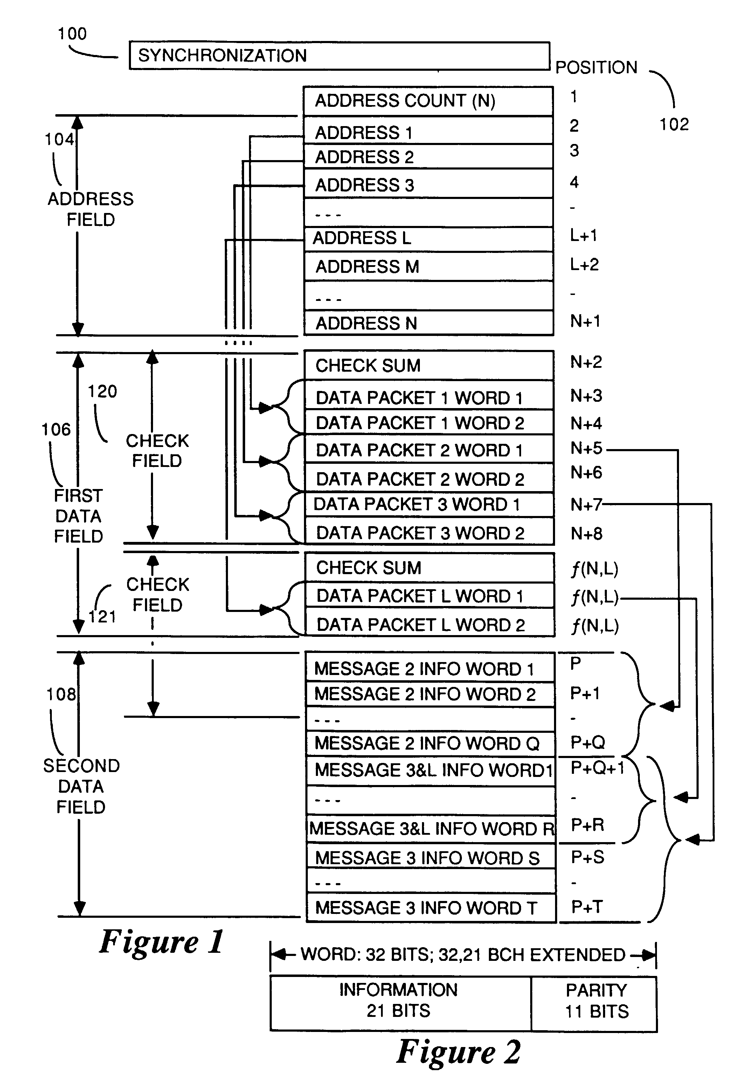

FIG. 1 shows the overall structure of the protocol in accordance with the present invention. The protocol begins with a synchronization word 100 which provides bit and frame synchronization signals which may be similar to the POCSAG preamble signal and first sync code. Providing for such signals is well known to those familiar with the art. The synchronization signal may additionally include a group identification signals identifying a selected group of pagers which are to decode the subsequent information. Following synchronization signal 100 is a number of information words of predetermined structure. The position of each information word relative to the synchronization signal is shown by position column 102. In position 1 is an information word having a boundary signal which indicates a division between an address field and a data field. In an embodiment of the invention, the boundary signal comprises an address count signal which defines address field 104. The address count signal has a value of "N" which indicates the number of words in the address field, or alternately, indicates the end of the address field and the beginning of data field 106-108. Following address field 104 is a data field divided into two portions. First data field 106 may contain message information for addresses within the address field. Following first data field 106 is second data field 108 which may contain additional message information.

The address field has at least two types of addresses; tone only addresses and data addresses. The message related to the tone only address is the address itself and thus has no other information associated with it. The message related to a data address is included within the first data field 106, or the first and second data fields 106 and 108, depending upon the message. Typically, a numeric message will be contained within the first data field, and an alphanumeric or long numeric message will be contained within the first and second data fields.

In one embodiment, addresses with related data messages are positioned within the first portion of the address field, and tone only addresses are in the second portion of the address field. Addresses in positions 1 through L are data message addresses and are thus positioned in the first portion of the address field. Address M through N are tone only messages are thus positioned within the second portion of the address field. The number of tone only and data addresses is variable, and the total number of addresses in the address field is also variable, thus providing flexibility in the varying demand for paging messaging.

Address count signal 102 further indicates the beginning position of the first data field 106. The first data field comprises a number of check fields 120 and 121. Each check field begins with a parity checksum word and includes three data packets, each data packet occupies two words. The information related to address 1, which is in position 2, is included within data packet 1, which is in positions N+3 and N+4. The position of a data packet is associated with the position of an address and value of the address count signal. Similarly, the information related to address 2, through address L, is included within data packets 2, through data packet L. Note that the tone only messages, which are in positions L+2 through N+1, require no associated data packet.

An example of how the location of a data packet associated with an address is determined is provided. In one embodiment, the first word after the synchronization signal is a word including the boundary signal which contains the address count. The address count has a value of N indicating that there are N words in the address field. Since there is one word per address, it follows that there are N addresses in the address field. Thus, the address field 104 ends N+1 words after the synchronization signal. The first data field 106 begins N+2 words after the synchronization signal and is a checksum word. The next two words comprise data packet 1, which has information related to the address 1, and are N+3 and N+4 words after the synchronization signal. Similarly, data packet 2 is associated with address 2 and is located N+5 and N+6 words after the synchronization signal.

In a generalized form, if an address of a data message occurs in a position X, and the address count has a value of N, the data packet associated with an address may be determined with the following equation:

$$\text{Data Packet Beginning Position} = N + \text{INTEGER}\left\{\frac{7X-5}{3}\right\}$$

Such a calculation may be readily made by a paging receiver during the reception of a message.

Thus, the protocol of FIG. 1 provides an efficient way to associate addresses with data packets. The location of every data packet is a function of the position X of the address relative to the synchronization signal and a transmitted value N indicating the boundary location of the end of the address field. The value N is used by every message thus providing for further protocol efficiency.

Note that in an alternate embodiment, the position of the data and tone only addresses within the address field may be reversed. Thus, data packet 1 would be related to the address in position N+1 and so on until data packet L which would be related to the address in position N+1-L.

In yet another embodiment, the address field may begin immediately after the synchronization signal and the boundary signal interposed between the address and data fields. In this embodiment, the boundary signal could comprise a predetermined codeword.

In still another embodiment, a bit in each codeword could indicate if the codeword occurred in the address field or data field. For example, in this embodiment, the address count in position 1 could be eliminated, and codewords in positions 1 through N+1 (the address field) could have the first bit set, and codewords in positions N+2 through P+T (the data field) could have the first bit clear, thereby indicating address and data fields. Thus, in this embodiment, the boundary signal is distributed through the codewords within the message signal.

Data packets are configured to optimally communicate numeric telephone number messages, which is the bulk of paging messaging. The typical numeric message may be contained entirely within an address and a data packet. In the event that more information is necessary for the data message, such as an alpha numeric message, the data packet provides a vector signal indicative of the location of the message within second data field 108. In addition to the vector signal, the data packet may also contain some message information. This has the advantage of only supplying vector signals with messages that are long, thus the relative overhead of the vector signal is minimized.

Referring to FIG. 1, data packet 2 includes a vector signal which identifies the position of message information associated with address 2. The message information is in second data field 108 and is in position P through P+Q. Address 2 has Q words of message information in the second data field, and the beginning position of the message is P words after the synchronization signal. Since Q is a variable, this method provides for associating any amount of message information with an address.

Additionally, this method allows addresses to share information in the second data field. Such an application would be if the second data field contained a series of stock market price quotations, companies A, B & C, for example. A first message would include a portion of the stock quotations, companies A & B, and a second message would include a second overlapping portion of the stock quotations companies A, B & C. Referring to FIG. 1, address L has an associated data packet L which has a vector signal indicating that message information words associated with address L is in positions P+Q+1 through P+R. Additionally, address 3 has an associated data packet 3 which has a vector signal indicating that message information words associated with address 3 is in positions P+Q+1 through P+T. Thus, the message information associated with address L is also associated with address 3. Address 3 further receives additional message information within words in positions P+S through P+T. It should be appreciated that a number of variations are possible with this invention. For example, the vector signal could begin message information for address 3 in a position between P and Q, thereby providing each message with unique and common message information. Alternately, the vector signal could end message information for address 3 at position P+R, thereby providing each message with the same message information. Additionally, more than two address may have common message information in the second data field thereby providing a group call function. Furthermore, message information in the second data field may be ordered in any sequence and need not correspond to the sequence of the associated address within the address field.

As previously indicated, the information within the protocol is included within codewords. The structure of the codeword is the 31,21 BCH extended codeword (32,21) which provides for error detection and correction. FIG. 2 shows the structure of this codeword. It includes 21 information bits and 10 parity bits calculated by a well known BCH generator polynomial. An eleventh parity bit establishes even parity on the 31 bits. In the preferred embodiment, all words after the synchronization signal are of this structure. It should be appreciated that an alternate embodiment may use a different structure codeword.

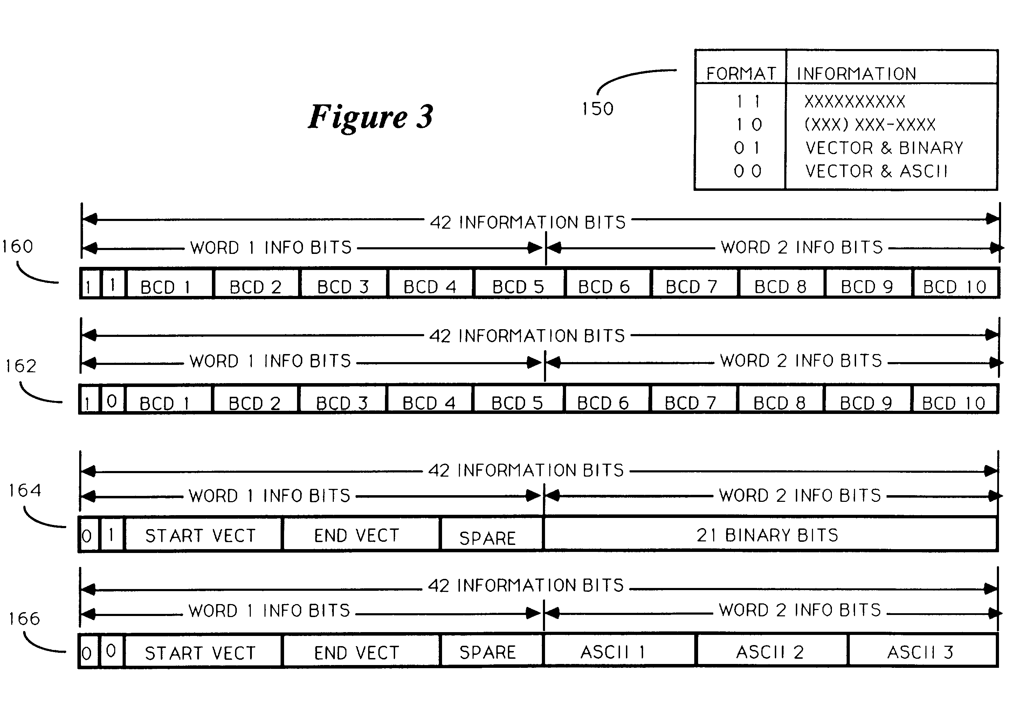

FIG. 3 shows the structure of the data packets within the first information field. Each data packet has two 32,21 words, thus each data packet has 42 bits of information. In the first portion of the information packet, a format signal indicates the structure of the information packet. In one embodiment, the format signal is the first two bits of the data packet. Table 150 shows four possible formats. A format signal of "11" indicates that the data packet contains ten unformatted BCD characters. The characters typically represent a telephone number. A format signal of "10" indicates that the data packet contains ten BCD characters, and the digits are to be displayed in a predetermined format. The predetermined format may vary from location to location or from paging receiver to paging receiver, or from pager address to pager address. For example, in the United States, the desired predetermined format may be " (XXX) XXX-XXXX". The "X"s represents the ten received BCD characters, and the format inserts an open parentheses character before the first character, and close parentheses and space characters between the third and fourth characters, and a dash character between the sixth and seventh characters. This provides for displaying of a fourteen-character message by a paging receiver while sending only ten BCD characters. An alternate format may insert a "dash" character between the third and fourth characters of a seven character message (XXX-XXXX).

The format may change from one country to the next. Additionally, in countries like Japan where a first city has a first telephone number format and a second city has a second telephone number format, both formats can be used by a single pager by assigning a first address to the first city and a second address to the second city. Thus, a "10" format signal associated with the first address causes the information to be displayed in the first format, and a "10" format signal associated with the second address causes the information to be displayed in the second format. The formats may be programmed into both a paging transmitter and the code plug of a paging receiver.

A format signal of "01" or "00" of FIG. 3 indicates that the first word contains a vector signal for identifying the position of message information in the second data field. In the one embodiment, the vector signal consists of a start vector and an end vector. The start vector indicating the position of the word in which the message information starts relative to the synchronization signal, and the end vector indicating the position of the word in which the message information ends. Alternate embodiments may use other methods for indicating the position of message information in the second data field including indicating the starting position of the message information and the number of words in the message, or the ending position of the message information and the number of words in the message, or the the vectors may indicate a position relative to the data packet, etc. In a first embodiment, each vector consist of seven bits, in alternate embodiments, the number of bits in the vector signal may be adjusted. Thus, the first embodiment has vector signal of fourteen bits, and a two bit status signal. This leaves five spare bits available in the first word of the data packet. These spare bits may be used for a larger vector signal, additional parity, or reserved for flags for future use.

A format signal of "01" indicates that the second word in the data packet contains 21 bits of binary information. These bits are unformatted binary bits and may be used by the paging receiver as status flags, programming information, etc. A format signal of "00" indicates that the second word of the data packet contains three ACSII characters. It should be appreciated that the spare bits in the first word can further define the type of information in the second word of the data packet, as well as the type of information in the second data field which has been identified by the vector signal. The type of information may vary depending upon the type of message. ASCII is shown, but the type may be varied for Chinese character sets, graphic messages, or digitized voice messages, etc.

Lines 160, 162, 164 and 166 shows the information format of the data packet corresponding to a format signal of "11", "10", "01", and "00" respectively. Note that in lines 160 and 162, BCD character 5 is split between two words. In alternate embodiments, additional BCD message formats may be assigned to format signals "01" and/or "00", thus eliminating one or both of the vector formats. Alternately, a format signal may indicate that the message continues in the following data packet.

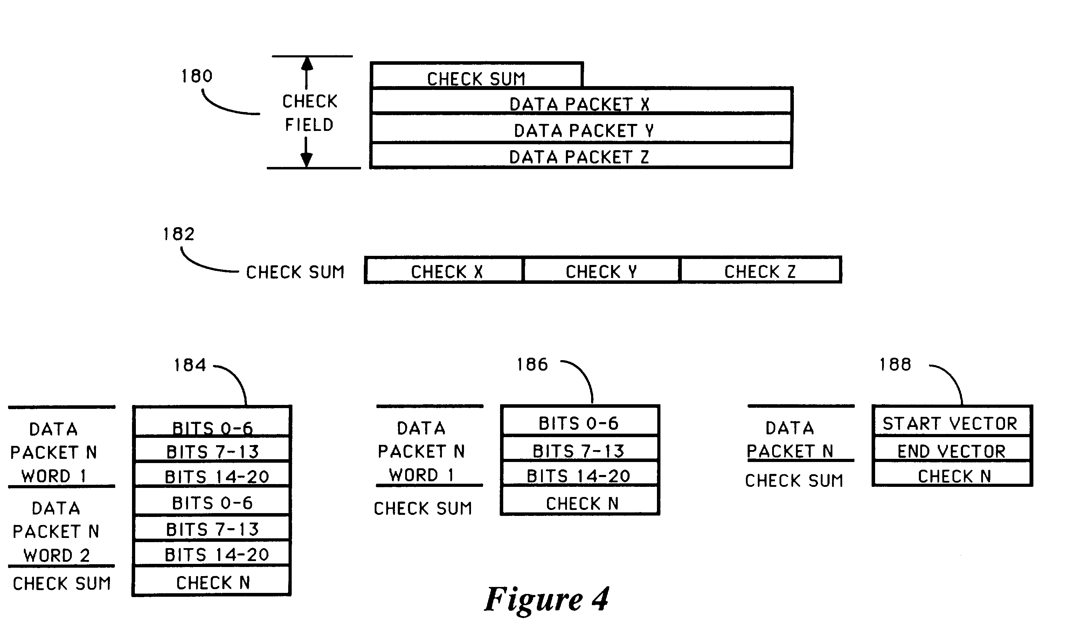

FIG. 4 shows the structure of the check field. As stated previously, a check field 180, consists of a checksum word and three data packets. The checksum word contains three seven-bit checksums 182, one checksum corresponding to each data packet. The checksum is a parity signal generated in response to information contained within the corresponding data packet. In the one embodiment, the checksum is generated by dividing each word of the data packet into three seven-bit segments and totalling the checksum in response to all six of the segments. This is shown by 184. The checksum may be determined in any one of a variety of methods known in the art. This includes determining exclusive OR of the segments, or adding the segments. The checksum provides additional falsing detection to the information within the data packet. In an alternate embodiment 186, the checksum may be determined on only the first word of the data packet. This provides additional falsing protection on the information therein including the vector signal. Still further, falsing protection of the vector signal may be made by determining the checksum only on the basis of the vector signal as shown by 188.

In yet another embodiment, a first checksum 184 may be used on message information which is contained entirely within the data packet (formats "11" and "10"), and a second checksum 188 may be used if additional message information is contained within the second data field formats ("01" and "00"). Additional checksums may be distributed through the message information in the second data field as well as in the second word in the data packet. For example, the second word in the data packet of format 166 provides for the first three ASCII characters of a data message having a large number of ASCII characters. The second data field would contain the remaining ASCII characters within a number words identified by the vector signal. Each word would provide for three ASCII characters. However, every ninth ASCII character would be substituted with a checksum of eight corresponding ASCII characters. The checksum could occur either at the beginning or end of the nine characters. In this way, the information in the second word of the data packet would either have or contain an associated checksum.

Thus, a check field includes a checksum word and a plurality of data packets, each data packet having a unique message. The checksum word has a corresponding plurality of portions, each portion having a checksum generated in response to the respective data packet. In the event the check field extends beyond the first data field, as in check field 121 of FIG. 1, the checksum information could be determined on the words within the second data field and be calculated in accordance with method 184 of FIG. 4.

The invention provides reduced overhead with respect to prior art signalling protocols. A series of ten-digit telephone number messages occupy five 32 bit words per message in the prior art POCSAG protocol. The invention provides the same message capability in three and one third words, one address word, one data packet (two words) and one third of a checksum word. Thus, the invention provides for sending such a message in 30% less bits. The invention additionally provides for twice as many individual address, as all twenty-one bits of information may be used to define an address. The check field provides for additional falsing protection not provided for in the prior art POCSAG system. Since addresses are grouped in a separate address field, pagers may process address information only in the address field and process data information only in the first or second data fields, thus address processing is not performed while data is being transmitted. Finally, this invention has the added advantage of using a single address for either numeric or alphanumeric messaging. The format signal in the data packet defines the type of information within the message. Prior art protocols use a first address for numeric messages and a second address for alphanumeric messages.

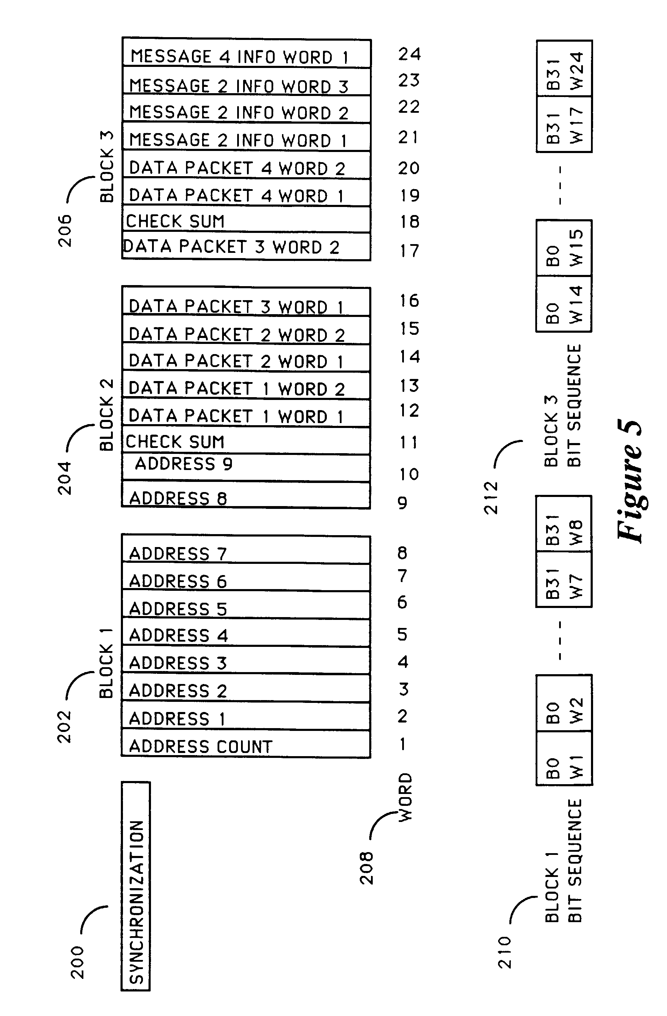

FIG. 5 shows the interleaving of the message information. In an embodiment of the present invention, the message information is interleaved for improved protection in a signal fading environment. The synchronization signal is transmitted prior to the first interleaved block. The first block 202 contains an address count and seven addresses. The second block 204 contains an eighth address and a portion of the first data field and a portion of a check field. The third block contains the remainder of the first data field, the remainder of the check field and the second data field. The position of each word relative to the synchronization signal is shown by 208. Each block consists of eight thirty-two bit words. Bit sequence 210 shows the bit transmission of the first block. Bit 0 of the first word is followed by bit 0 of the second word which is followed by bit 0 of each subsequent word until after bit 0 of the eighth word wherein bit 1 of the first word follows. The sequence continues until bit thirty-one of the eight word is transmitted. This completes the first block transmission. Thereafter, the second and third blocks are transmitted in a like sequence. The third block bit sequence is shown by 212. The number of words and interleaved blocks of a protocol transmission may be increased or decreased to provide for the amount of message to be transmitted.

An embodiment of the present invention provides for a predetermined number of interleaved blocks within a transmission. The transmission could be followed by preamble signal and a subsequent predetermined number of interleaved blocks.

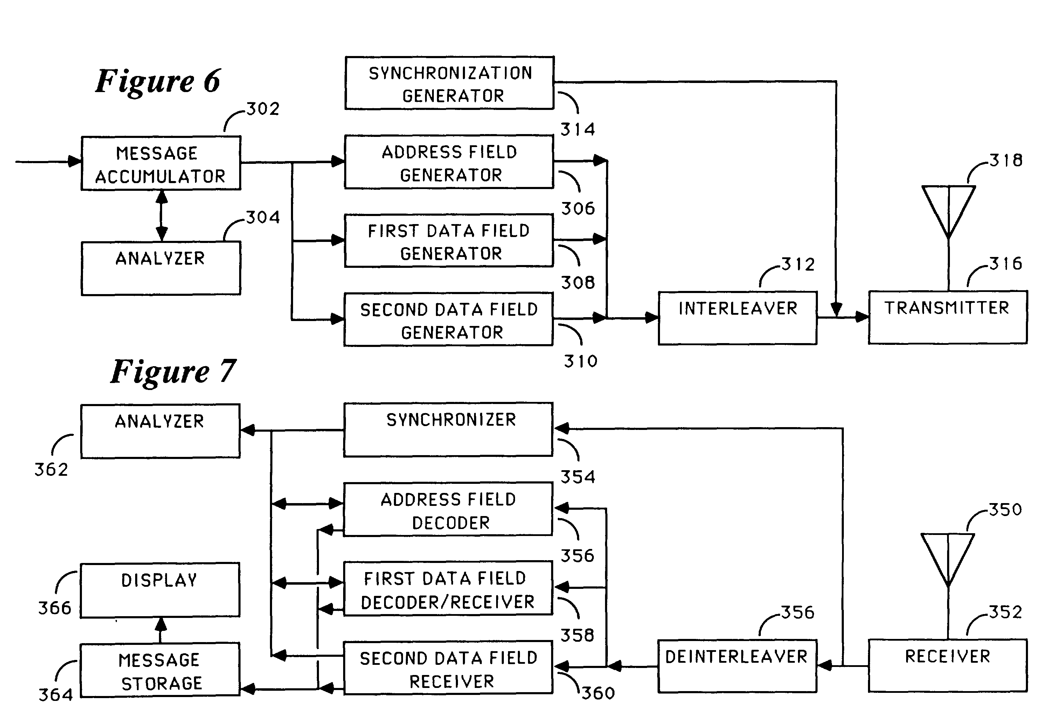

FIG. 6 shows a block diagram of a transmitter for generating a paging signal in accordance with the present invention. The transmitter operating in accordance with the present invention may be incorporated within a MODAX 500 radio paging terminal manufactured by the assignee of the invention. Messages are received from a telephone network and accumulated in message accumulator 302. Analyzer 304 analyzes the messages accumulated in order to determine the aforementioned boundary signal, vector signals and format signals. The address field is generated by address field generator 306. Likewise, in response to analyzer 304, first and second data fields are generated by generators 308 and 310. The three fields and the boundary signal are interleaved by interleaver 312. Synchronization generator 314 generates periodic synchronization signals between which the message signal from interleaver 312 is interposed. Finally, the signal is frequency modulated and transmitted through transmitter 316 and radiated to a plurality of selective call receivers through antenna 318.

FIG. 7 shows a block diagram of a paging receiver operating in accordance with the present invention. The radiated signal is received by antenna 350 and demodulated by receiver 352. Synchronizer 354 synchronizes to the synchronization signal. Deinterleaver 356 then deinterleaves the demodulated signal in response to synchronization. Address field decoder 356, decodes the boundary signal, and in response to the boundary signal, decodes the address field within the deinterleaved signal for an address matching a predetermined address assigned to the paging receiver. In response to detecting a match, first data field decoder/receiver 358 receives and decodes the check field associated with the address from within the deinterleaved signal. The information from the data packet is extracted, and in response to a vector signal, second data field receiver 360 receives message information from the second data field. Analyzer 362 determines the operation of elements 354-360 in order to cause the paging receiver to process the signal according to the aforementioned description and also includes the pager code plug which contains at least one address assigned to the pager as well as a predefined format for display of numeric messages. Upon receiving a message, information from elements 356-360 are combined in order to form a message which is stored in message storage memory 364 and displayed on display 366. Receiver 352 additionally contains a battery saving means responsive to the analyzer in order to conserve battery power consumed by the paging receiver. It should be appreciated that in another embodiment, interleaver 312 of FIG. 6 and deinterleaver 356 of FIG. 7 may be eliminated while still realizing advantages of the invention. Allowed U.S. Application Serial No. 07/199,732 to DeLuca et al., assigned to the assignee of the present invention, provides an enabling description of a paging system performing similar functions and is hereby incorporated by reference.

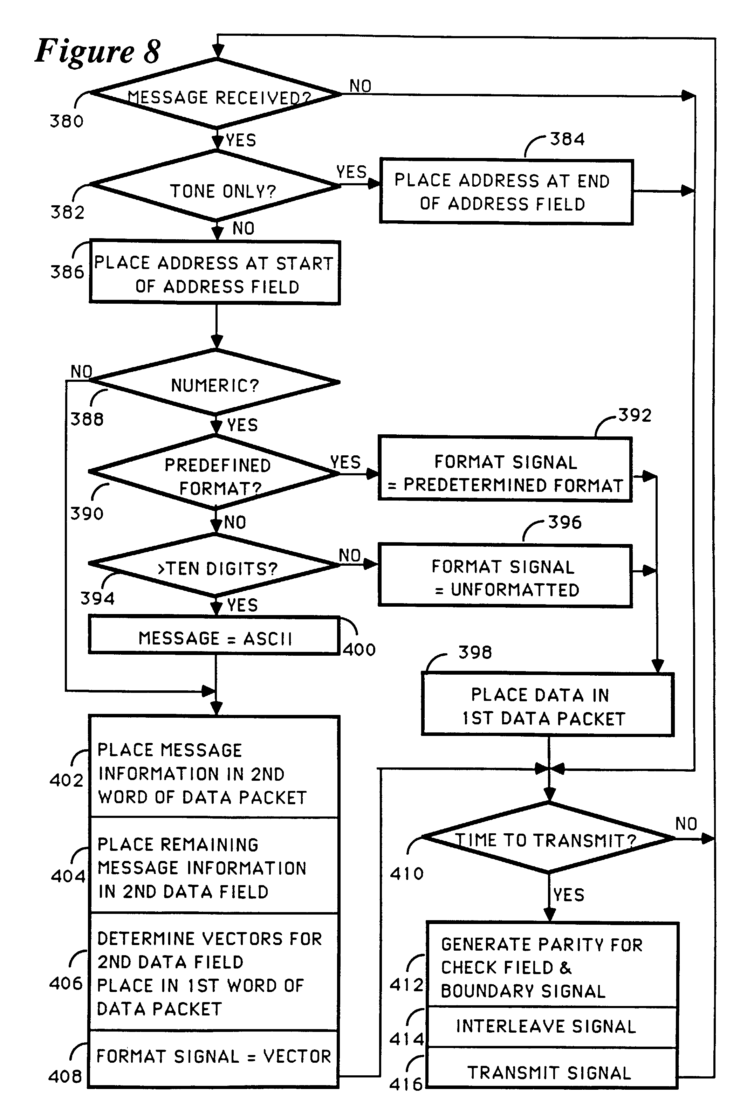

FIG. 8 shows a flowchart of a transmitter operating in accordance with the present invention. The flowchart may be implemented within software operating within the paging terminal. Step 380 checks if a message has been received. If received, step 382 checks if the message is a tone only message. If true, step 384 places the address at the end of the address field. If false, step 386 places the address at the start of the address field. In either step 384 or 386, prior addresses may be moved toward the center of the address field. Step 388 checks if the message is a numeric message. If true, step 390 checks if the numeric message has a predefined format. If true, step 392 sets the format signal to correspond to the predefined format. If false, step 394 checks if the numeric message has greater than ten characters. If false, step 396 sets the format signal to correspond to the unformatted message. If true, step 400 converts the numeric message to ASCII characters. From either step 400 or 388, step 402 places a portion of the message information in the second word of the data packet. Step 404 places the remaining message information in the second data field. Step 406 determines the vector signals corresponding to the placement of step 404, and step 408 sets the format signal to indicate that the data packet contains a vector signal. From either step 408, 398, 384, or 380, step 410 checks if it is time to transmit. This corresponds to either the expected occurrence of a synchronization signal or sufficient information accumulated to merit transmitting. If false, step 380 is again executed. If true, step 412 generates the parity signals for the check word in the check field. Step 414 then interleaves the signal, and step 416 transmits the signal. Step 380 is again executed. Thus, the flowchart of FIG. 8 describes generating the signal of FIG. 1.

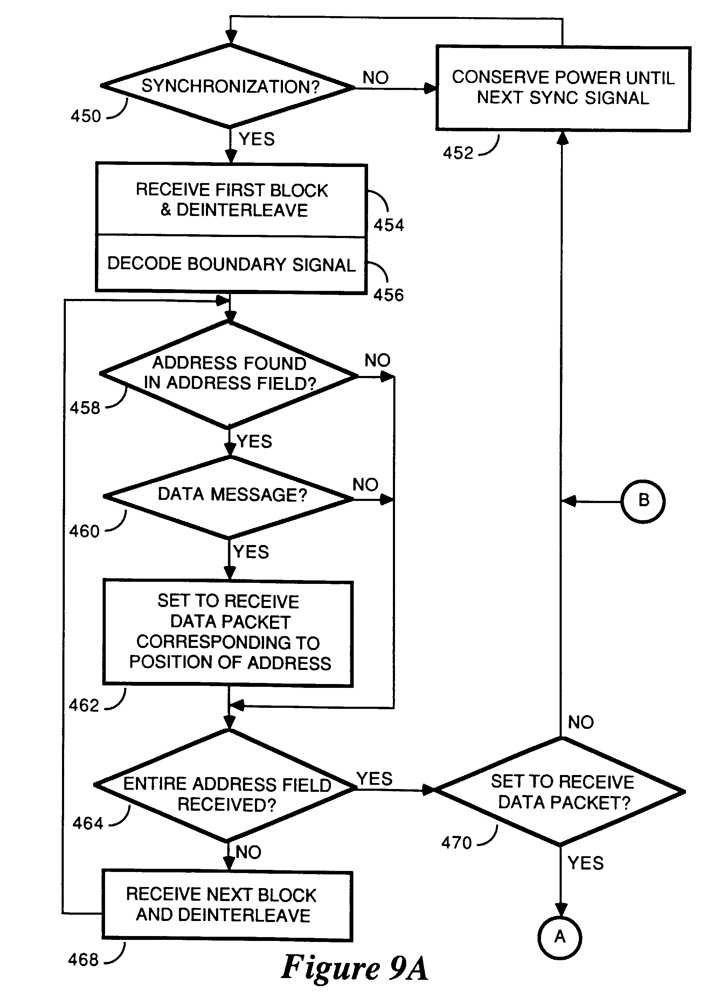

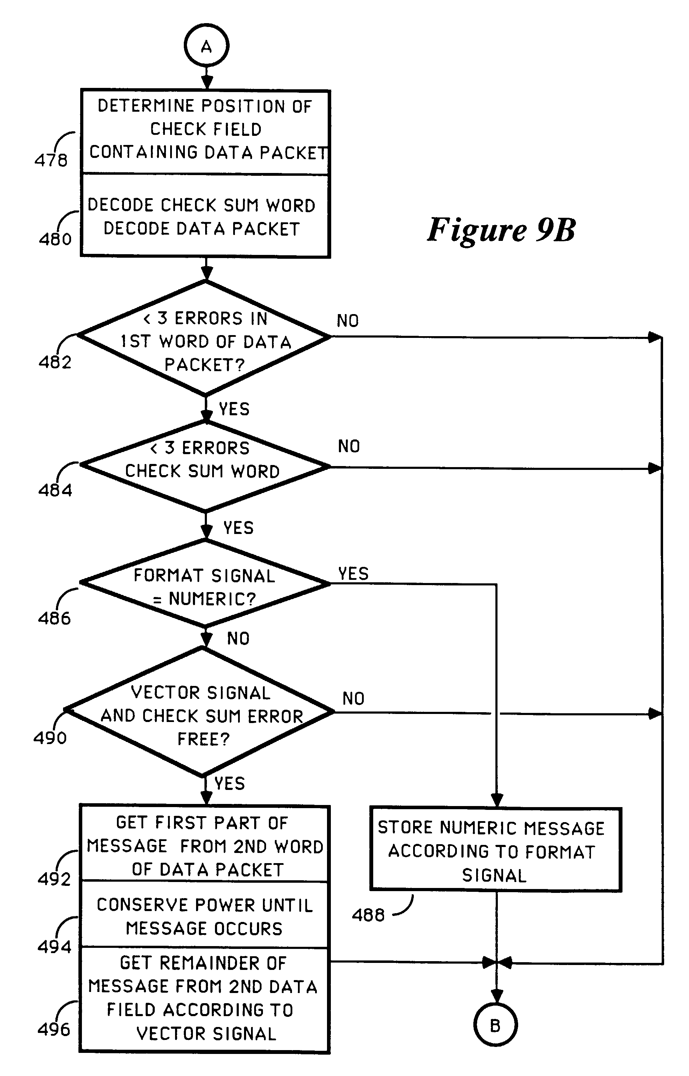

FIGS. 9A and 9B show a flowchart of a paging receiver operation in accordance with the present invention. The flowchart may be implemented in software operating within a microcomputer controlling the operation of a paging receiver. A description of a microcomputer based paging receiver is included in U.S. Patents 4,755,816 and 4,851,829 both to DeLuca et al., which are hereby incorporated by reference. These patents, when combined with the disclosure herein, provide an enabling description of a pager operating in accordance with the present invention.

Step 450 of FIG. 9A checks if the sync signal has been received. If false, step 452 conserves power until the next expected occurrence of the sync signal. If true, step 454 receives and deinterleaves the first block. Then step 456 decodes the boundary signal which defines the address field. Step 458 checks if an address matching the address assigned to the receiver is found in the address field. If true, step 460 checks if the address corresponds to a data message. If true, step 462 determines the position of data packet related to the address by the position of the address and the boundary signal, and sets to receive the data packet. From either step 462 or the false result of steps 460 or 458, step 464 checks if the entire address field has been received. If false, step 468 receives and deinterleaves the next block and step 458 is again executed. If true, step 470 checks if step 462 has set the pager to receive a data packet. If false, step 452 is executed, thereby conserving power for the remaining blocks of the signal. If true, through connector "A", step 478 of FIG. 9B determines the position of the check field containing the data packet and receives and deinterleaves the corresponding block or blocks. Then step 480 decodes the checksum word and data packet from the check field. Step 482 checks if less than three errors are detected in the first word of the data packet. If true, step 484 checks if less than three bit errors were detected in checksum word. If either step 482 or 484 were false, the message has too many errors to decode and through connector "B", step 452 is executed. In response to a true result of step 484, step 486 checks if the format signal in the data packet corresponds to a numeric message. If true, step 488 stores the numeric message according to the format signal as previously described. In this step, the check signal from the checksum word may may be used to detect errors in the numeric message. If the result of step 486 was false, step 490 compares the vector signal, and the check signal for errors. If an error is found, the integrity of the vector signal is compromised, the message is not decoded, and through connector "B", step 452 is executed. It should be noted that any of the check techniques of FIG. 4 may be used in this step. If the vector signal is error free, step 492 gets the first part of the message from the second word of the data packet. Then step 494 determines the position of the data in the second data field from the vector signal and conserves power by disabling the receiver until such an occurrence, thereby conserving battery power. Then in step 496, the blocks having the message information in the second data field are received and decoded, thereby receiving the message. From either step 492, 488, 484, or 482, step 452 of FIG. 9A is executed, thereby completing decoding of the signal.

It should be appreciated to those skilled in the art that many modifications may be made to the flowcharts of FIGS. 8 and 9 while remaining within the scope of the invention. In particular, a number of steps may be modified or deleted if the process of interleaving and deinterleaving were to be eliminated. Although such an elimination would reduce the protection of the signal from the fading noise environment, improved battery savings may be realized by eliminating the requirement to receive entire blocks of interleaved information. Alternately, the check word and use of the check word in the invention could also be eliminated, thereby improving overall efficiency of information communication while sacrificing falsing protection.

It will be generally appreciated that many other modifications to the above may be made without departing from the scope of the invention, as defined by the appended claims.

## Claims

1. A method for receiving a message signal having an address signal identifying a selective call receiver and a related information signal having message information, said message signal comprising:

    an address field comprising a plurality of address signals;

    a first information field following said address field, and having a plurality of data packets, each data packet being associated by position with an address signal; and

    a second information field following said first information field having a plurality of information signals; wherein a vector signal included within one of said plurality of data packets within the first information field indicates the position of a related one of said plurality of information signals within the second information field, the method comprising the steps of:

    (a) determining the presence of an address signal within the address field matching a predetermined address assigned to the selective call receiver;

    (b) determining the position of a data packet associated with the position of the address signal matching the predetermined address;

    (c) receiving the data packet and the vector signal therein;

(d) determining the position of the related information signal within the second information field in response to the vector signal; and

(e) recovering the related information signal.

2. The message signal according to claim 1 wherein the one of said plurality of data packets additionally includes a portion of the related information signal.

3. The method according to claim 1 wherein the vector signal includes a beginning vector signal indicating the position of the beginning of the related information signal within the second information field and an end vector signal indicating the position of the end of the related information signal within the second information field and step (e) of recovering includes the step of receiving the message signal between the beginning and end positions and recovering the related information signal therefrom.

4. The method according to claim 3 wherein the message signal is comprised of a plurality of words having a predetermined number of bits, and wherein a boundary signal is comprised within one word, each address is comprised within one word, each information packet is comprised within two words, and the second information field includes a plurality of words, and further wherein the boundary signal corresponds to the number of words within the address field and the beginning vector signal includes a value corresponding to the number of words between the beginning of the address field and the beginning of the related information signal in the second data field.

5. The method according to claim 4 wherein the words contain 32 binary bits and are formatted into 32,21 BCH code words having 21 information bits and 11 parity bits.

6. The method of claim 1 wherein said message signal further comprises a boundary signal indicating a boundary between said address field and said first information field, and the method further comprises the step of receiving the boundary signal, and step (b) of receiving further includes the step determining the position of the beginning of the first data field in response to the boundary signal in order to determining the position of the data packet.

**Patentansprüche**

1. Verfahren zum Empfangen eines Nachrichtensignals mit einem Adreßsignal, das einen selektiven Rufempfänger identifiziert, und ein dazu gehörenden Informationssignal mit Nachrichteninformation, wobei das Nachrichtensignal umfaßt:

ein Adreßfeld, das mehrere Adreßsignale umfaßt,

ein erstes Informationsfeld, das auf das Adreßfeld folgt und mehrere Datenpakete enthält, wobei jedes Datenpaket über die Position einem Adreßsignal zugeordnet ist, und

ein zweites Informationsfeld nach dem ersten Informationsfeld mit mehreren Informationssignalen, wobei ein Vektorsignal, das in den mehreren Datenpakete innerhalb des ersten Informationsfeldes enthalten ist, die Position eines zugehörigen der mehreren Informationssignale innerhalb des zweiten Informationsfeldes anzeigt, wobei das Verfahren die Schritte umfaßt:

(a) Bestimmen, ob ein Adreßsignal im Adreßfeld vorliegt, das mit einer vorgegebenen Adresse übereinstimmt, die dem selektiven Rufempfänger zugewiesen ist,

(b) Bestimmen der Position des Datenpakets, das zur Position des mit der vorgegebenen Adresse übereinstimmenden Adreßsignals gehört,

(c) Empfangen des Datenpakets mit dem Vektorsignal darin,

(d) Bestimmen der Position des zugehörigen Informationssignals innerhalb des zweiten Informationsfeldes in Abhängigkeit von dem Vektorsignal und

(e) Wiederherstellen des zugehörigen Informationssignals.

2. Nachrichtensignal gemäß Anspruch 1, in dem das eine der mehreren Datenpakete außerdem einen Teil des zugehörigen Informationssignals enthält.

3. Verfahren gemäß Anspruch 1, in dem das Vektorsignal ein Startvektorsignal, das die Position des Anfangs des zugehörigen Informationssignals im zweiten Informationsfeld anzeigt, und ein Schlußvektorsignal enthält, das die Position des Endes des zugehörigen Informationssignals im zweiten Informationsfeld anzeigt, und Schritt (e) des Wiederherstellens den Schritt enthält, das Nachrichtensignal zwischen der Anfangs- und Endposition zu empfangen und daraus das zugehörige Informationssignal wiederherzustellen.

**4.** Verfahren gemäß Anspruch 3, bei dem das Nachrichtensignal aus mehreren Worten mit einer vorgegebenen Bitzahl gebildet wird und bei dem innerhalb eines Wortes ein Begrenzungssignal gebildet wird, wobei jede Adresse innerhalb eines Wortes enthalten ist, jedes Infomationspaket innerhalb zweier Worten enthalten ist und das zweite Informationsfeld mehrere Worte enthält und bei dem außerdem das Begrenzungssignal die Anzahl der Worte im Adreßfeld angibt und das Startvektorsignal einen Wert erhält, der der Anzahl der Worte zwischen dem Anfang des Adreßfeldes und dem Anfang des zugehörigen Informationssignals im zweiten Datenfeld angibt.

**5.** Verfahren gemäß Anspruch 4, bei dem die Worte 32 binäre Bits enthalten und in 32,21 BCH Kodierungsworten mit 21 Informationsbits und 11 Paritätsbits formatiert sind.

**6.** Verfahren nach Anspruch 1, bei dem das Nachrichtensignal außerdem ein Begrenzungssignal umfaßt, das eine Grenze zwischen dem Adreßfeld und dem ersten Informationsfeld anzeigt, und das Verfahren außerdem den Schritt umfaßt, das Begrenzungssignal zu empfangen, und Schritt (b) des Empfangens außerdem den Schritt enthält, die Position des Anfangs des ersten Datenfelds in Abhängigkeit von dem Begrenzungssignal zu bestimmen, um die Position des Datenpakets zu bestimmen.

**Revendications**

**1.** Procédé permettant de recevoir un signal de message ayant un signal d'adresse identifiant un récepteur d'appels sélectifs et un signal d'information associé ayant des informations de message, ledit signal de message comprenant :

un champ d'adresses comprenant une pluralité de signaux d'adresses ;
un premier champ d'information suivant ledit champ d'adresses, et ayant une pluralité de paquets de données, chaque paquet de données étant associé par position à un signal d'adresse ; et
un deuxième champ d'information suivant ledit premier champ d'information ayant une pluralité de signaux d'information ; dans lequel un signal vectorisé inclus dans un paquet de ladite pluralité de paquets de données dans le premier champ d'information indique la position d'un signal associé de ladite pluralité de signaux d'information dans le deuxième champ d'information, le procédé comprenant les étapes de :

(a) détermination de la présence d'un signal d'adresse dans le champ d'adresses correspondant à une adresse prédéterminée affectée au récepteur d'appels sélectifs ;
(b) détermination de la position d'un paquet de données associé à la position du signal d'adresse correspondant à l'adresse prédéterminée ;
(c) réception du paquet de données et du signal vectorisé dans celui-ci ;
(d) détermination de la position du signal d'information associé dans le deuxième champ d'information, en réponse au signal vectorisé ; et
(e) rétablissement du signal d'information associé.

**2.** Signal de message selon la revendication 1, dans lequel un paquet de ladite pluralité de paquets de données comprend, de plus, une partie du signal d'information associé.

**3.** Procédé selon la revendication 1, dans lequel le signal vectorisé comprend un signal vectorisé de début indiquant la position du début du signal d'information associé dans le deuxième champ d'information et un signal vectorisé de fin indiquant la position de la fin du signal d'information associé dans le deuxième champ d'information, et dans lequel l'étape (e) de rétablissement comprend l'étape de réception du signal de message entre les positions de début et de fin et le rétablissement du signal d'information associé de celui-ci.

**4.** Procédé selon la revendication 3, dans lequel le signal de message comprend une pluralité de mots ayant un nombre prédéterminé de bits, et dans lequel un signal limite est compris dans un mot, chaque adresse est comprise dans un mot, chaque paquet d'information est compris dans deux mots, et le deuxième champ d'information comprend une pluralité de mots, et dans lequel, de plus, le signal limite correspond au nombre de mots dans le champ d'adresses et le signal vectorisé de début comprend une valeur correspondant au nombre de mots entre le début du champ d'adresses et le début du signal d'information associé dans le deuxième champ de données.

**5.** Procédé selon la revendication 4, dans lequel les mots contiennent 32 bits et sont formatés en mots de code 32,21 BCH ayant 21 bits d'information et 11 bits de parité.

**6.** Procédé selon la revendication 1, dans lequel le signal de message comprend, de plus, un signal limite indiquant une limite entre ledit champ d'adresses et ledit premier champ d'information, et le procédé comprend, de plus, l'étape de réception du signal limite, et dans lequel l'étape (b) de réception comprend, de plus, l'étape de détermination de la position du début du premier champ de données, en réponse au signal limite, de manière à déterminer la position du paquet de données.

**Figure 1**

| | POSITION |
|---|---|
| SYNCHRONIZATION | |
| ADDRESS COUNT (N) | 1 |
| ADDRESS 1 | 2 |
| ADDRESS 2 | 3 |
| ADDRESS 3 | 4 |
| - - - | - |
| ADDRESS L | L+1 |
| ADDRESS M | L+2 |
| - - - | - |
| ADDRESS N | N+1 |
| CHECK SUM | N+2 |
| DATA PACKET 1 WORD 1 | N+3 |
| DATA PACKET 1 WORD 2 | N+4 |
| DATA PACKET 2 WORD 1 | N+5 |
| DATA PACKET 2 WORD 2 | N+6 |
| DATA PACKET 3 WORD 1 | N+7 |
| DATA PACKET 3 WORD 2 | N+8 |
| CHECK SUM | $f(N,L)$ |
| DATA PACKET L WORD 1 | $f(N,L)$ |
| DATA PACKET L WORD 2 | $f(N,L)$ |
| MESSAGE 2 INFO WORD 1 | P |
| MESSAGE 2 INFO WORD 2 | P+1 |
| - - - | - |
| MESSAGE 2 INFO WORD Q | P+Q |
| MESSAGE 3&L INFO WORD1 | P+Q+1 |
| - - - | - |
| MESSAGE 3&L INFO WORD R | P+R |
| MESSAGE 3 INFO WORD S | P+S |
| - - - | - |
| MESSAGE 3 INFO WORD T | P+T |

100

102

104 — ADDRESS FIELD

106 — FIRST DATA FIELD

120 — CHECK FIELD

121 — CHECK FIELD

108 — SECOND DATA FIELD

**Figure 2**

← WORD: 32 BITS; 32,21 BCH EXTENDED →

| INFORMATION 21 BITS | PARITY 11 BITS |
|---|---|

## Figure 3

| FORMAT | INFORMATION |
|--------|-------------|
| 1 1 | XXXXXXXXXX |
| 1 0 | (XXX) XXX–XXXX |
| 0 1 | VECTOR & BINARY |
| 0 0 | VECTOR & ASCII |

150

**160**

42 INFORMATION BITS

WORD 1 INFO BITS — WORD 2 INFO BITS

| 1 | 1 | BCD 1 | BCD 2 | BCD 3 | BCD 4 | BCD 5 | BCD 6 | BCD 7 | BCD 8 | BCD 9 | BCD 10 |

**162**

42 INFORMATION BITS

WORD 1 INFO BITS — WORD 2 INFO BITS

| 1 | 0 | BCD 1 | BCD 2 | BCD 3 | BCD 4 | BCD 5 | BCD 6 | BCD 7 | BCD 8 | BCD 9 | BCD 10 |

**164**

42 INFORMATION BITS

WORD 1 INFO BITS — WORD 2 INFO BITS

| 0 | 1 | START VECT | END VECT | SPARE | 21 BINARY BITS |

**166**

42 INFORMATION BITS

WORD 1 INFO BITS — WORD 2 INFO BITS

| 0 | 0 | START VECT | END VECT | SPARE | ASCII 1 | ASCII 2 | ASCII 3 |

EP 0 489 034 B1

EP 0 489 034 B1

180

CHECK FIELD

| CHECK SUM |
|---|
| DATA PACKET X |
| DATA PACKET Y |
| DATA PACKET Z |

182

CHECK SUM

| CHECK X | CHECK Y | CHECK Z |
|---|---|---|

184

DATA PACKET N WORD 1

DATA PACKET N WORD 2

CHECK SUM

| BITS 0-6 |
|---|
| BITS 7-13 |
| BITS 14-20 |
| BITS 0-6 |
| BITS 7-13 |
| BITS 14-20 |
| CHECK N |

186

DATA PACKET N WORD 1

CHECK SUM

| BITS 0-6 |
|---|
| BITS 7-13 |
| BITS 14-20 |
| CHECK N |

188

DATA PACKET N CHECK SUM

| START VECTOR |
|---|
| END VECTOR |
| CHECK N |

*Figure 4*

SYNCHRONIZATION — 200

BLOCK 1 — 202
- ADDRESS COUNT
- ADDRESS 1
- ADDRESS 2
- ADDRESS 3
- ADDRESS 4
- ADDRESS 5
- ADDRESS 6
- ADDRESS 7

BLOCK 2 — 204
- ADDRESS 8
- ADDRESS 9
- CHECK SUM
- DATA PACKET 1 WORD 1
- DATA PACKET 1 WORD 2
- DATA PACKET 2 WORD 1
- DATA PACKET 2 WORD 2
- DATA PACKET 3 WORD 1

BLOCK 3 — 206
- DATA PACKET 3 WORD 2
- CHECK SUM
- DATA PACKET 4 WORD 1
- DATA PACKET 4 WORD 2
- MESSAGE 2 INFO WORD 1
- MESSAGE 2 INFO WORD 2
- MESSAGE 2 INFO WORD 3
- MESSAGE 4 INFO WORD 1

WORD — 208: 1 2 3 4 5 6 7 8 9 10 11 12 13 14 15 16 17 18 19 20 21 22 23 24

210 — BLOCK 1 BIT SEQUENCE: | B0 W1 | B0 W2 | - - - | B31 W7 | B31 W8 |

212 — BLOCK 3 BIT SEQUENCE: | B0 W14 | B0 W15 | - - - | B31 W17 | B31 W24 |

*Figure 5*

EP 0 489 034 B1

## Figure 6

MESSAGE ACCUMULATOR ~302

ANALYZER ~304

SYNCHRONIZATION GENERATOR ~314

ADDRESS FIELD GENERATOR ~306

FIRST DATA FIELD GENERATOR ~308

SECOND DATA FIELD GENERATOR ~310

INTERLEAVER ~312

TRANSMITTER ~316

~318

## Figure 7

ANALYZER

362

DISPLAY

366

MESSAGE STORAGE

364

SYNCHRONIZER ~354

ADDRESS FIELD DECODER ~356

FIRST DATA FIELD DECODER/RECEIVER ~358

SECOND DATA FIELD RECEIVER ~360

DEINTERLEAVER ~356

RECEIVER ~352

~350

EP 0 489 034 B1

*Figure 8*

*Figure 9A*

**Figure 9B**

```
                    ( A )
                      │
                      ▼
        ┌──────────────────────────┐
        │  DETERMINE POSITION OF   │
        │       CHECK FIELD        │
   478  │ CONTAINING DATA PACKET   │
        ├──────────────────────────┤
        │  DECODE CHECK SUM WORD   │
   480  │   DECODE DATA PACKET     │
        └──────────────────────────┘
                      │
                      ▼
              ╱ < 3 ERRORS IN ╲          NO
   482      ◄  1ST WORD OF DATA  ►──────────────────────┐
              ╲    PACKET?    ╱                          │
                      │ YES                              │
                      ▼                                  │
              ╱  < 3 ERRORS  ╲            NO             │
   484      ◄  CHECK SUM WORD  ►────────────────────────┤
              ╲             ╱                            │
                      │ YES                              │
                      ▼                                  │
              ╱ FORMAT SIGNAL ╲          YES             │
   486      ◄   = NUMERIC?      ►──────────┐             │
              ╲             ╱              │             │
                      │ NO                 │             │
                      ▼                    │             │
              ╱ VECTOR SIGNAL  ╲   NO      │             │
   490      ◄ AND CHECK SUM ERROR ►────────┤             │
              ╲     FREE?    ╱             │             │
                      │ YES                │             │
                      ▼                    ▼             │
        ┌──────────────────────────┐  ┌──────────────────┐
        │   GET FIRST PART OF      │  │ STORE NUMERIC    │
        │ MESSAGE FROM 2ND WORD    │  │ MESSAGE          │
   492  │   OF DATA PACKET         │  │ ACCORDING TO     │
        ├──────────────────────────┤  │ FORMAT SIGNAL    │
        │  CONSERVE POWER UNTIL    │  └──────────────────┘
   494  │    MESSAGE OCCURS        │     488
        ├──────────────────────────┤
        │  GET REMAINDER OF        │
        │ MESSAGE FROM 2ND DATA    │
        │ FIELD ACCORDING TO       │
   496  │   VECTOR SIGNAL          │
        └──────────────────────────┘
                      │
                      ▼
                    ( B )
```

18